# EUROPÄISCHE PATENTSCHRIFT

(11) **EP 1 522 126 B1**
(45) Veröffentlichungstag und Bekanntmachung des Hinweises auf die Patenterteilung: **07.06.2006**
(21) Anmeldenummer: 03740387.0
(22) Anmeldetag: 30.06.2003
(51) Int. Cl.: H01R 31/06

(54) **VERTEILEREINRICHTUNG EINER TELEKOMMUNIKATIONSANLAGE**
DISTRIBUTION DEVICE OF A TELECOMMUNICATIONS SYSTEM
DISPOSITIF DE REPARTITION D'INSTALLATION DE TELECOMMUNICATION

(30) Priorität: 17.07.2002 DE 10232444
(43) Veröffentlichungstag der Anmeldung: 13.04.2005
(73) Patentinhaber: CCS Technology, Inc., Wilmington, DE 19803 (US)
(72) Erfinder: MATTHIES, Jürgen, 58455 Witten (DE); BREUER-HECKEL, Mike, 44143 Dortmund (DE); BADURA, Stefan, 58708 Menden (DE)
(74) Vertreter: Sturm, Christoph
(86) Internationale Anmeldenummer: PCT/EP2003/006937
(87) Internationale Veröffentlichungsnummer: WO 2004/008589

(56) Entgegenhaltungen:
- EP-A- 0 777 298
- DE-A- 19 842 447
- US-B1- 6 186 808

## Beschreibung

Die Erfindung betrifft eine Verteilereinrichtung einer Telekommunikationsanlage gemäß dem Oberbegriff des Anspruchs 1.

Verteilereinrichtungen der obigen Art sind aus dem Stand der Technik hinlänglich bekannt. So zeigt zum Beispiel die DE 199 12 522 C2 eine derartige Verteilereinrichtung einer Telekommunikationsanlage. Bei der dort offenbarten Verteilereinrichtung handelt es sich um einen sogenannten Verteilerblock, in dem sandwichartig mehrere Verteilerleisten übereinander angeordnet sind. Jede Verteilerleiste, auch Kontaktleiste genannt, umfasst mehrere Verteilerelemente, auch Kontaktelemente genannt. Nach dem Stand der Technik unterscheidet man bei den Kontaktelementen sogenannte Trennelemente von sogenannten Schaltelementen, je nach dem, ob Kontaktfedern der Kontaktelemente aneinander liegen oder voneinander getrennt sind.

Wenn nachfolgend der Begriff Verteilereinrichtungen verwendet wird, so soll im Sinne der Erfindung hierunter sowohl ein Verteilerblock als auch eine Verteilerleiste verstanden werden können. Auch können mehrere Verteilerblöcke untereinander verschaltet sein und eine Verteilereinrichtung im Sinne der Erfindung bilden.

Nach dem Stand der Technik werden zum Aufbau von Verteilerblöcken Verteilerleisten mit unterschiedlich konfigurierten Kontaktelementen verwendet. Die Kontaktelemente sind nach dem Stand der Technik hinsichtlich ihrer Konfiguration nicht veränderbar. Es müssen daher nach dem Stand der Technik für spezielle Anwendungsfälle unterschiedliche Verteilerleisten vorgehalten werden. Ferner ist die Flexibilität derartiger Verteilerleisten und daraus zusammengesetzter Verteilerblöcke gering.

Hinsichtlich weiteren Standes der Technik wird verwiesen auf DE 198 42 447 A, EP 0 777 298 A und US 6 189 808 B1.

Hiervon ausgehend liegt der vorliegenden Erfindung das Problem zu Grunde, eine neuartige Verteilereinrichtung einer Telekommunikationsanlage zu schaffen.

Dieses Problem wird durch eine Verteilereinrichtung mit den Merkmalen des Anspruchs 1 gelöst.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1: eine Verteilereinrichtung einer Telekommunikationsanlage nach dem Stand der Technik in perspektivischer Seitenansicht,
- Fig.2: ein Kontaktelement nach dem Stand der Technik für die Verteilereinrichtung der Fig. 1 in schematisierter Darstellung,
- Fig. 3: ein weiteres Kontaktelement nach dem Stand der Technik für die Verteilereinrichtung der Fig. 1 in schematisierter Darstellung,
- Fig. 4: ein weiteres Kontaktelement nach dem Stand der Technik für die Verteilereinrichtung der Fig. 1 in schematisierter Darstellung,
- Fig. 5: ein weiteres Kontaktelement nach dem Stand der Technik für die Verteilereinrichtung der Fig. 1 in schematisierter Darstellung,
- Fig. 6: ein erstes Kontaktelement für eine Verteilereinrichtung einer Telekommunikationsanlage im Sinne der Erfindung,
- Fig. 7: ein zweites Kontaktelement für eine Verteilereinrichtung einer Telekommunikationsanlage im Sinne der Erfindung,
- Fig. 8: ein drittes Kontaktelement für eine Verteilereinrichtung einer Telekommunikationsanlage im Sinne der Erfindung,
- Fig. 9: ein viertes Kontaktelement für eine Verteilereinrichtung einer Telekommunikationsanlage im Sinne der Erfindung,
- Fig. 10: ein fünftes Kontaktelement für eine Verteilereinrichtung einer Telekommunikationsanlage im Sinne der Erfindung
- Fig. 11: ein sechstes Kontaktelement für eine Verteilereinrichtung einer Telekommunikationsanlage im Sinne der Erfindung,
- Fig. 12: ein siebtes Kontaktelement für eine Verteilereinrichtung einer Telekommunikationsanlage im Sinne der Erfindung,
- Fig. 13: ein achtes Kontaktelement für eine Verteilereinrichtung einer Telekommunikationsanlage im Sinne der Erfindung,
- Fig. 14: ein neuntes Kontaktelement für eine Verteilereinrichtung einer Telekommunikationsanlage im Sinne der Erfindung,
- Fig. 15: ein weiteres Kontaktelement für eine Verteilereinrichtung einer Telekommunikationsanlage im Sinne der Erfindung,
- Fig. 16: ein weiteres Kontaktelement für eine Verteilereinrichtung einer Telekommunikationsanlage im Sinne der Erfindung,
- Fig. 17: ein weiteres Kontaktelement für eine Verteilereinrichtung einer Telekommunikationsanlage im Sinne der Erfindung,
- Fig. 18: ein weiteres Kontaktelement für eine Verteilereinrichtung einer Telekommunikationsanlage im Sinne der Erfindung, und
- Fig. 19: ein weiteres Kontaktelement für eine Verteilereinrichtung einer Telekommunikationsanlage im Sinne der Erfindung.

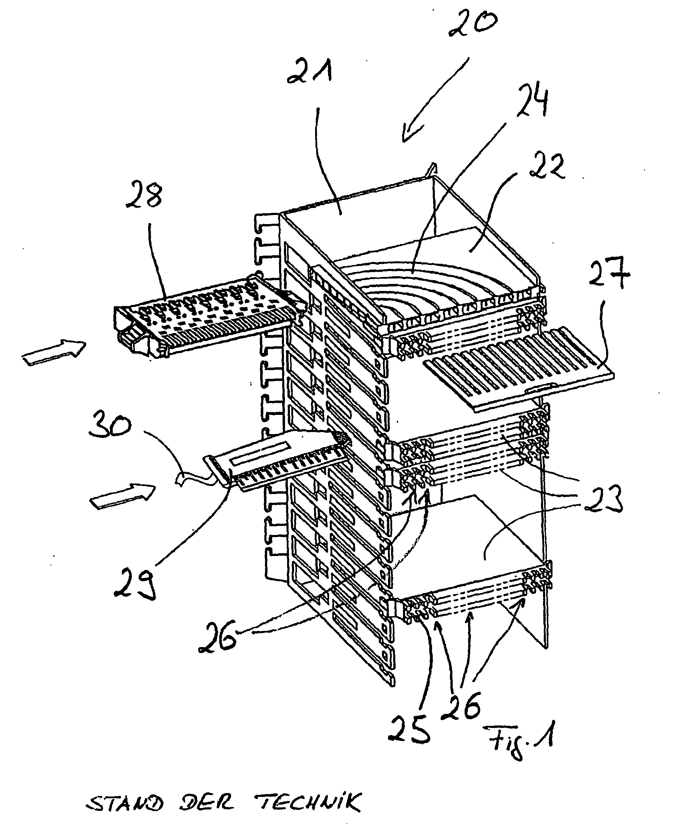

Figur 1 zeigt einen Verteilerblock 20 nach dem Stand der Technik. Der dort gezeigte Verteilerblock 20 verfügt über ein Trägerteil 21, wobei im Trägerteil 21 scheibenartige Drahtführungen 22 und Verteilerleisten 23, die auch als Kontaktleisten bezeichnet werden, sandwichartig übereinander angeordnet sind. Das Trägerteil 21 wird auch als Aufnahmewanne bezeichnet. Die Drahtführungen 22 weisen bogenförmig gekrümmte Drahtführungskanäle 24 auf, in welchen ankommende und abgehende Leitungen geführt werden können. Die Verteilerleisten 23 sind an einer Seite mit Schneidklemmen 25 versehen, in deren Klemmschlitze die ankommenden und abgehenden Leitungen mit Hilfe eines Werkzeuges kontaktgebend eingedrückt werden können. Jede Verteilerleiste 23 ist aus mehreren Kontaktelementen 26 gebildet, wobei die Schneidklemmen 25 an den Kontaktelementen 26 angreifen. Im Inneren tragen die Kontaktelemente 26 Kontaktfedern. Je nach dem ob die Kontaktfedern der Kontaktelemente 26 aneinander liegen oder voneinander getrennt sind, bezeichnet man die Kontaktelemente als Trennelement oder Schaltelement. Insbesondere dann, wenn der Verteilerblock 20 aus Verteilerleisten 23 gebildet ist, deren Kontaktelement 26 als Trennelemente ausgebildet sind, so ist von der Frontseite des Verteilerblocks 20 her ein Trennstecker 27 einschiebbar, um die Trennelemente im Bedarfsfall unterbrechen zu können. Weiterhin zeigt Figur 1 ein seitlich in das Trägerteil 21 einschiebbares Schutzmagazin 28. Dieses kann auch von hinten in das Trägerteil einschiebbar sein. Nach dem Stand der Technik ist vorzugsweise jeder Verteilerleiste 23 ein Schutzmagazin 28 zugeordnet, um die Kontaktelemente 26 der Verteilerleiste 23 vor Überstrom und/oder Überspannung zu schützen. Ebenso zeigt Figur 1 einen Kabelstecker 29, der ebenfalls von der Seite her in das Trägerteil 21 des Verteilerblocks 20 einschiebbar ist. Im Bedarfsfall kann ein derartiger Kabelstecker 29, an welchem ein vorkonfektioniertes Kabel 30 angreift, jede der Verteilerleisten 23 zugeordnet werden, um die Kontaktelemente 26 der entsprechenden Verteilerleiste 23 zum Beispiel mit einer Verteilerleiste eines anderen Verteilerblocks zu verbinden.

Wie bereits erwähnt, sind die Verteilerleisten 23 nach dem Stand der Technik aus vorzugsweise acht oder zehn Kontaktelementen 26 zusammengesetzt. Es können jedoch auch aus vier oder fünf Kontaktelementen 26 gebildete Verteilerleisten 23 Verwendung finden. Nach dem Stand der Technik handelt es sich bei den Kontaktelementen 26 um vorkonfigurierte und hinsichtlich ihrer Konfiguration nicht veränderbare Bauelemente.

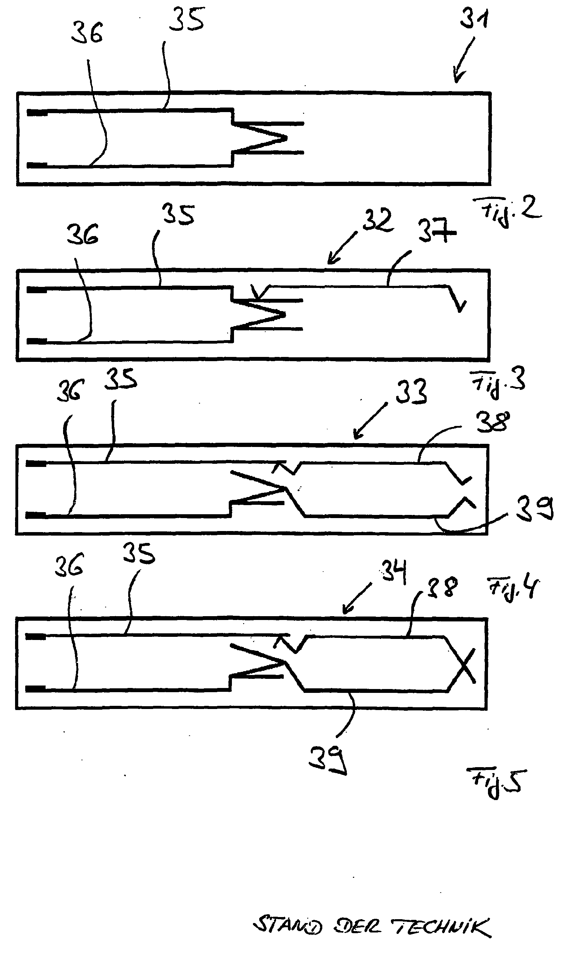

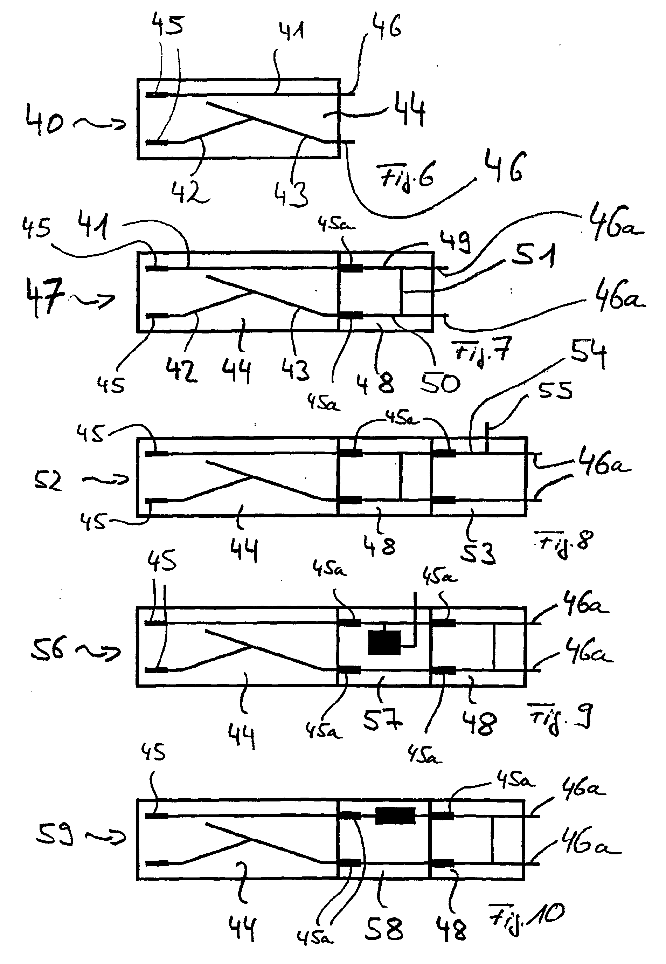

Figuren 2 bis 5 zeigen insgesamt vier Kontaktelemente 31, 32, 33 und 34 nach dem Stand der Technik. Es verfügt das Kontaktelement 31 gemäß Figur 2 über zwei Kontaktfedern 34 und 35, die einander berühren. Es handelt sich bei dem Kontaktelement 31 demnach um ein Trennelement. Auch bei dem Kontaktelement 32 der Figur 3 handelt es sich um ein Trennelement, dessen Kontaktfedern 35, 36 einander berühren. Im Unterschied zur Figur 2 ist bei dem Kontaktelement 32 der Figur 3 der Kontaktfeder 35 jedoch ein sogenannter 3-Punkt-Schutzkontakt zugeordnet, damit an das Kontaktelement 32 im Bedarfsfall ein als Überspannungsschutz wirkendes Schutzelement des Schutzmagazins 28 angeschlossen werden kann.

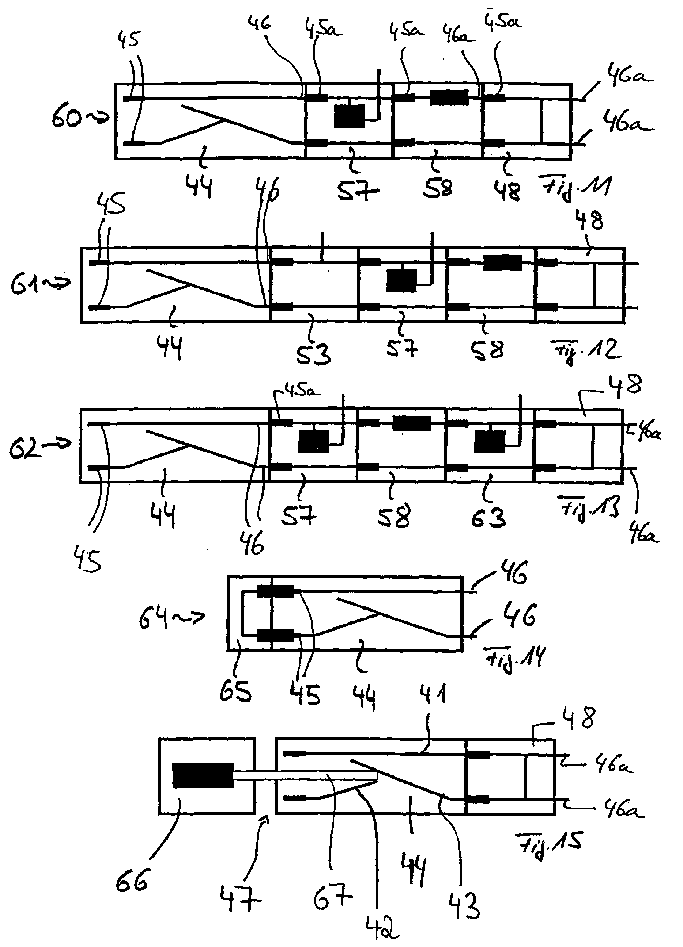

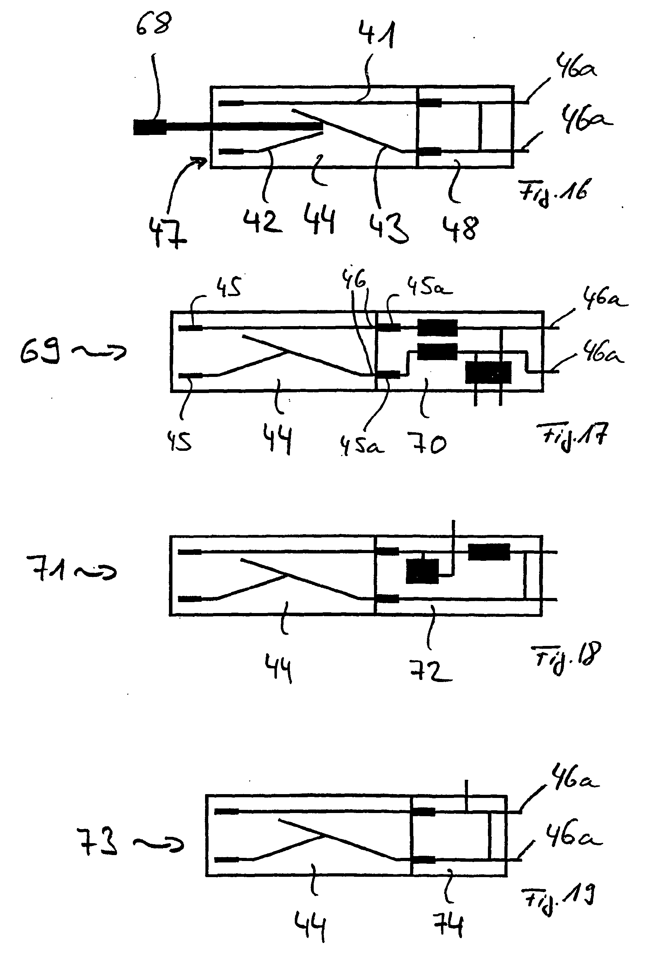

Figur 4 zeigt ein Kontaktelement 33, dessen Kontaktfedern 35 und 36 einander nicht berühren. Bei dem dort dargestellten Kontaktelement 33 handelt es sich um ein Schaltelement. Den Kontaktfedern 35 und 36 des Kontaktelements 33 sind sogenannte 5-Punkt-Schutzkontakte 38 und 39 zugeordnet. Beim Kontaktelement 33 der Figur 4 handelt es sich um offene 5-Punkt-Schutzkontakte 38, 39, die einander nicht berühren und einen sogenannten Zwangsschutz bilden. Beim Ausführungsbeispiel der Figur 5 hingegen, berühren die 5-Punkt-Schutzkontakte 38, 39 des Kontaktelements 34 einander. Es handelt sich bei dem Kontaktelement 34 der Figur 5 also um ein Trennelement. Über die 5-Punkt-Schutzkontakte 38 und 39 ist im Bedarfsfall ein als Überspannungsschutz und Überstromschutz wirkendes 5-Punkt-Schutzelement des Schutzmagazins 28 an das jeweilige Kontaktelement anschließbar.

Bei den in Figuren 2 bis 5 dargestellten Kontaktelementen 31, 32, 33 und 34 nach dem Stand der Technik handelt es sich um vorkonfigurierte Kontaktelemente. Dies bedeutet, dass diese Kontaktelemente entweder als Schaltelemente oder als Trennelemente ausgebildet sind. Des Weiteren sind sie entweder mit einem 3-Punkt-Schutzkontakt oder mit 5-Punkt-Schutzkontakten vorkonfiguriert. Um dem jeweiligen Anwendungsfall gerecht zu werden, müssen daher unterschiedliche Verteilerleisten bereitgehalten werden, die aus derartigen Kontaktelementen zusammengesetzt sind. Weiterhin sind aus derartigen Kontaktelementen gebildete Verteilerleisten nicht flexibel umkonfigurierbar.

Um die obigen Nachteile des Standes der Technik zu umgehen, wird erfindungsgemäß eine Verteilereinrichtung für eine Telekommunikationsanlage vorgeschlagen, deren Kontaktelemente über einen modularen Aufbau verfügen. Durch Veränderung des modularen Aufbaus der Kontaktelemente lässt sich die Konfiguration des jeweiligen Kontaktelementes verändern. Dies ist in Figuren 6 bis 19 dargestellt.

So zeigt Figur 6 ein Kontaktelement 40, welches drei Kontaktfedern 41, 42, 43 umfasst. Die beiden unteren Kontaktfedern 42, 43 des Kontaktelementes 40 bilden eine funktionale Einheit und liegen aneinander an. Die beiden Kontaktfedern 42, 43 berühren jedoch die obere Kontaktfeder 41 nicht. Das Kontaktelement 40 gemäß Figur 6 bildet demnach ein sogenanntes Schaltelement. Das Kontaktelement 40 der Figur 6 bildet weiterhin ein Basiselement 44 im Sinne der Erfindung. Es verfügt über Eingänge 45 um ankommende oder abgehende Leitungen anzuschließen sowie über Ausgänge 46, um weitere Module, sogenannte Ergänzungsmodule, an das Basismodul 44 anschließen zu können.

Bei dem in Figur 7 dargestellten Kontaktelement 47 ist an das Basismodul 44 ein Ergänzungsmodul 48 angeschlossen. Bei dem Ergänzungsmodul 48 handelt es sich um ein Kurzschlussmodul. So greift ein erstes Leiterelement 49 des Ergänzungsmoduls 48 an der Kontaktfeder 41 und ein zweites Leiterelement 50 des Ergänzungsmoduls 48 an der Kontaktfeder 43 an. Die beiden Leiterelemente 49, 50 sind über ein Leiterelement 51 kurzgeschlossen. Mit Hilfe des Ergänzungsmoduls 48 ist das als Schaltelement ausgebildete bzw. konfigurierte Basismodul 44 demnach in ein Trennelement umkonfigurierbar.

Wie weiterhin Fig. 7 entnommen werden kann, verfügt auch das Ergänzungsmodul 48 über Eingänge 45a und Ausgänge 46a. Über die Eingänge 45a ist das Ergänzungsmodul 48 mit den Ausgängen 46 des Basismoduls 44 verbindbar. Über die Ausgänge 46a des Ergänzungsmodul 48 sind weitere Ergänzungsmodule an dasselbe abschließbar.

Figur 8 zeigt ein Kontaktelement 52, bestehend aus dem um das erste Ergänzungsmodul 48 erweiterten Basismodul 44 und aus einem zweiten Ergänzungsmodul 53. Das zweite Ergänzungsmodul 53 ist mit seinen Eingängen 45a an die Ausgänge 46a des ersten Ergänzungsmoduls 48 angeschlossen. Das Ergänzungsmodul 53 ist als Kabelmodul ausgebildet. Mit Hilfe des als Kabelmodul ausgebildeten zweiten Ergänzungsmoduls 53 ist das aus dem Basismodul 44 und dem ersten Ergänzungsmodul 48 gebildete Trennelement mit einem anderen, nicht dargestellten Kontaktelement verbindbar. Hierzu ist an einem Leiterelement 54 des Ergänzungsmoduls 53 ein Kabel 55 oder eine Anschlussklemme angeschlossen. Mit Hilfe der Erfindung ist demnach nicht nur das als Schaltelement ausgebildete Kontaktelement 40 in ein als Trennelement ausgebildetes Kontaktelement 47 umkonfigurierbar, vielmehr lässt sich durch den erfindungsgemäßen modularen Aufbau auch die Funktion des nach dem Stand der Technik als separate Baugruppe ausgebildeten Kabelsteckers 29 in ein Kontaktelement 52 integrieren. Auch dies erhöht deutlich die Flexibilität der erfindungsgemäßen Verteilereinrichtung und verkürzt zugleich die Montagezeit für den Monteur.

Die Leiterelemente 49, 50, 51 bzw. 54 der Ergänzungsmodule können als Leiterbahnen, elektrische Leiter in Form von Drähten oder Blechen oder auch als Kontaktfedern ausgebildet sein. Die konkrete Ausgestaltung der Leiterelemente 49, 50, 51 bzw. 54 obliegt dem Fachmann.

Figur 9 zeigt ein Kontaktelement 56, bei welchem zwischen dem Basismodul 44 und dem ersten Ergänzungsmodul 48 ein drittes Ergänzungsmodul 57 angeordnet ist. Das dritte Ergänzungsmodul 57 ist über seine Eingänge 45a mit den Ausgängen 46 des Basismoduls 44 und über seine Ausgänge 46a mit den Eingängen 45a des ersten Ergänzungsmoduls 48 verbunden. Das dritte Ergänzungsmodul 57 ist als sogenanntes Überspannungsschutzmodul ausgebildet. Es schützt demnach das über das Basismodul 44 und das erste Ergänzungsmodul 48 gebildete Trennelement vor auf dasselbe einwirkenden Überspannungen. Auf diese Art und Weise kann in das Kontaktelement 56 ein 3-Punkt-Schutz integriert werden. Nach dem Stand der Technik war hierzu ein separat ausgebildetes Schutzmagazin erforderlich.

Auf gleiche Art und Weise kann in ein aus dem Basismodul 44 und dem ersten Ergänzungsmodul 48 gebildetes Trennelement ein 2-Punkt-Schutz integriert werden. Hierzu ist zwischen das Basismodul 44 und das erste Ergänzungsmodul 48 ein als Überstromschutzmodul ausgestaltetes Ergänzungsmodul 58 angeordnet. Auf diese Art und Weise wird ein Kontaktelement 59, wie in Figur 10 dargestellt, geschaffen.

Figur 11 zeigt ein Kontaktelement 60, bei welchem zwischen das Basismodul 44 und das erste Ergänzungsmodul 48 sowohl das als Überspannungsschutzmodul ausgebildete Ergänzungsmodul 57 als auch das als Überstromschutzmodul ausgebildete Ergänzungsmodul 58 geschaltet ist. Bei dem Kontaktelement 60 der Figur 11 handelt es sich demnach um ein Trennelement, in welches ein kombinierter Überspannungsschutz sowie Überstromschutz und damit sogenannter 5-Punkt-Schutz integriert ist.

Beim Kontaktelement 61 der Figur 12 sind zwischen dem Basismodul 44 und dem ersten Ergänzungsmodul 48, die zusammen ein Trennelement bilden, insgesamt drei weitere Ergänzungsmodule positioniert. Es handelt sich hierbei um das als Überstromschutzmodul ausgebildete Ergänzungsmodul 58, das als Überspannungsschutzmodul ausgebildete Ergänzungsmodul 57 und um das als Kabelmodul ausgebildete Ergänzungsmodul 53. Auf diese Art und Weise kann das Basismodul 44 demnach derart umkonfiguriert werden, dass aus dem als Schaltelement ausgebildeten Basismodul 44 ein als Trennelement mit integriertem 5-Punkt-Schutz sowie integriertem Kabelstecker ausgebildetes Trennelement wird.

Figur 13 zeigt ein Kontaktelement 62, welches prinzipiell wie das Kontaktelement 60 der Figur 11 aufgebaut ist. Zusätzlich zu dem als Überspannungsschutzmodul ausgebildeten Ergänzungsmodul 57 und dem als Überstromschutzmodul ausgebildeten Ergänzungsmodul 58 ist jedoch ein weiteres Ergänzungsmodul 63 zwischen dem Basismodul 44 und dem ersten Ergänzungsmodul 48 angeordnet. Das weitere Ergänzungsmodul 63 ist ebenso wie das Ergänzungsmodul 57 als Überspannungsschutzmodul ausgebildet. Mit Hilfe des Ergänzungsmoduls 57 wird ein Grobschutz vor Überspannungen gewährleistet. Das weitere Ergänzungsmodul 63 hingegen erlaubt einen Feinschutz gegenüber Überspannungen.

Figur 14 zeigt ein Kontaktelement 64, bestehend aus dem Basismodul 44 und einem an den Eingängen 45 des Basismoduls 44 angreifenden weiteren Ergänzungsmodul 65, welches als sogenanntes Kurzschlussmodul bzw. Überbrückungsmodul ausgebildet ist. Mit Hilfe des als Kurzschlussmodul ausgebildeten Ergänzungsmoduls 65 ist ohne Unterbrechung auf der Teilnehmerseite des Kontaktelements eine Umkonfigurierung bzw. ein Umbau des Kontaktelements 64 möglich. Das als Kurzschlussmodul bzw. Überbrückungsmodul ausgebildet Ergänzungsmodul 65 verfügt demnach über Anschlusskontakte, die in die Eingänge 45 des Basismoduls 44 angreifen.

Figur 15 zeigt das aus dem Basismodul 44 und dem ersten Ergänzungsmodul 48 gebildete und als Trennelement wirkende Kontaktelement 47 mit einer in das Basismodul 44 eingeschobenen Prüfeinheit 66. Mit einem Stecker 67 drückt die Prüfeinheit 66 zwischen die beiden Kontaktfedern 42, 43 des Basismoduls 44. Über entlang des Steckers 67 verlaufende Leiterbahnen lassen sich so Prüfsignale in das Kontaktelement 47 einleiten bzw. Messsignale aus demselben herausleiten. Auf dieselbe Art und Weise lässt sich auch an Stelle der Prüfeinheit 66 ein Schutzmodul in das Basismodul 44 einschieben.

Figur 16 zeigt das Kontaktelement 47 gemäß Figur 7 mit einem Trennstecker 68. Der Trennstecker 68 kann, wie aus dem Stand der Technik bekannt, ausgebildet sein. So lassen sich im Bedarfsfall die Kontaktfedern 42, 43 des Basismoduls 44 trennen und ein Teilnehmer von einer Telekommunikationsanlage entkoppeln.

Figur 17 zeigt ein Kontaktelement 69, bestehend aus dem Basismodul 44 und einem an das Basismodul 44 angeschlossenen weiteren Ergänzungsmodul 70, welches hier als sogenannter xDSL-Splitter ausgebildet ist. Durch Auswahl der unterschiedlichsten Ergänzungsmodule lassen sich demnach im Sinne der Erfindung Kontaktelemente nachträglich und flexibel an unterschiedliche Einsatzzwecke anpassen bzw. umkonfigurieren. Auch als xDSL-Splitter ausgebildete Ergänzungsmodul 70 greift über Eingänge 45a an den Ausgängen 46 des Basismoduls 44 an, wobei an Ausgängen 46a des Ergänzungsmoduls 70 weitere Ergänzungsmodule anschließbar sind.

An dieser Stelle sei darauf hingewiesen, dass es dem hier angesprochenen Fachmann unter Studium der hier vorliegenden Erfindung selbstverständlich ist, dass die in Figuren 6 bis 17 gezeigten Ergänzungsmodule gegebenenfalls auch zu einem neuen Ergänzungsmodul zusammengefasst werden können. So zeigt Figur 18 ein Kontaktelement 71, bei welchem an das Basismodul 44 gemäß Figur ein Ergänzungsmodul 72 angeschlossen ist. Das Ergänzungsmodul 72 gemäß Figur 18 vereinigt die Funktionen der Ergänzungsmodule 57 und 58 gemäß Figuren 9 und 10. Bei dem Ergänzungsmodul 72 handelt es sich demnach um einen kombinierten Überspannungsschutz sowie Überstromschutz.

Figur 19 zeigt ein Kontaktelement 73, welches aus dem Basismodul 44 und einem Ergänzungsmodul 74 gebildet ist, wobei das Ergänzungsmodul 74 die Funktionen der Ergänzungsmodule 48 und 53 der Figur 8 miteinander kombiniert.

Im Sinne der Erfindung wird demnach eine Verteilereinrichtung einer Telekommunikationsanlage vorgeschlagen, deren Kontaktelemente über einen modularen Aufbau verfügen, wobei der modulare Aufbau durch ein Basismodul und unterschiedliche Ergänzungsmodule bestimmt werden kann. Durch die Auswahl der unterschiedlichen Ergänzungsmodule lässt sich ein Kontaktelement beliebig an einen gewünschten Einsatzzweck umkonfigurieren. Darüber hinaus sind Funktionen eines Kabelsteckers und eines Schutzmagazins in das Kontaktelement integrierbar. Auch weitere Funktionen lassen sich in ein Kontaktelement integrieren. Wie den Figuren 6 bis 19 entnommen werden kann, werden das Basismodul und die jeweiligen Ergänzungsmodule in Reihe zueinander geschaltet und demnach in Reihenschaltung miteinander kombiniert. Ein nachträglicher Umbau einer derart aufgebauten Verteilereinrichtung ist demnach ohne Weiteres und mit geringem Aufwand möglich. Auch ist es möglich zu wählen, ob eine Verteilereinrichtung für einen bestimmten Anwendungsfall vom Hersteller vorkonfektioniert wird, oder ob der Kunde notwendige Änderungen an der Verteilereinrichtung selbst vornimmt.

Die Verbindung des Basismoduls 44 mit dem oder jedem Ergänzungsmodul 48, 53, 57, 58, 63, 65, 70, 72 bzw. 74 erfolgt über die Eingänge 45, 45a und Ausgänge 46, 46a von Basismodul und Ergänzungsmodul. Die Verbindung zwischen den Ausgängen 46 und Eingängen 45a bzw. den Ausgängen 46a und Eingängen 45a erfolgt bevorzugt über Steckverbindungen. Steckverbindungen lassen sich durch Einstecken einfach herstellen und durch Herauszeihen einfach lösen. So kann die oder jede Steckverbindung in PC-Steckertechnik, Board-to-Board-Steckertechnik oder RS232-Steckertechnik ausgeführt sein. Der bei der RS232-Steckertechnik vorhandene Erdungsanschluss kann hier zur Schirmungszwecken verwendet werden. Die Auswahl einer geeigneten Steckverbindung oder eines geeigneten Steckers obliegt dem hier angesprochenen Fachmann.

### Bezugszeichenliste

- 20: Verteilerblock
- 21: Trägerteil
- 22: Drahtführung
- 23: Verteilerleiste
- 24: Drahtführungskanal
- 25: Schneidklemmen
- 26: Kontaktelement
- 27: Trennstecker
- 28: Schutzmagazin
- 29: Kabelstecker
- 30: Kabel
- 31: Kontaktelement
- 32: Kontaktelement
- 33: Kontaktelement
- 34: Kontaktelement
- 35: Kontaktfeder
- 36: Kontaktfeder
- 37: 3-Punkt-Schutzkontakt
- 38: 5-Punkt-Schutzkontakt
- 39: 5-Punkt-Schutzkontakt
- 40: Kontaktelement
- 41: Kontaktfeder
- 42: Kontaktfeder
- 43: Kontaktfeder
- 44: Basismodul
- 45, 45a: Eingang
- 46, 46a: Ausgang
- 47: Kontaktelement
- 48: Ergänzungsmodul
- 49: Leiterelement
- 50: Leiterelement
- 51: Leiterelement
- 52: Kontaktelement
- 53: Ergänzungsmodul
- 54: Leiterelement
- 55: Kabel
- 56: Kontaktelement
- 57: Ergänzungsmodul
- 58: Ergänzungsmodul
- 59: Kontaktelement
- 60: Kontaktelement
- 61: Kontaktelement
- 62: Kontaktelement
- 63: Ergänzungsmodul
- 64: Kontaktelement
- 65: Ergänzungsmodul
- 66: Prüfeinheit
- 67: Stecker
- 68: Trennstecker
- 69: Kontaktelement
- 70: Ergänzungsmodul
- 71: Kontaktelement
- 72: Ergänzungsmodul
- 73: Kontaktelement
- 74: Ergänzungsmodul

## Patentansprüche

1. Verteilereinrichtung einer Telekommunikationsanlage, nämlich Verteilerleiste oder Verteilerblock mit mehreren Verteilerleisten, wobei die oder jede Verteilerleiste mehrere Kontaktelemente aufweist, und wobei jedes Kontaktelement mindestens zwei Kontaktfedern aufweist, **dadurch gekennzeichnet, dass**:
a) jedes Kontaktelement (40, 47, 52, 56, 59, 60, 61, 62, 64, 69, 71, 73) einen modularen Aufbau aufweist, derart, dass die Konfiguration jedes Kontaktelements (40, 47, 52, 56, 59, 60, 61, 62, 64, 69, 71, 73) durch Veränderung des modularen Aufbaus des jeweiligen Kontaktelements veränderbar ist,
b) jedes Kontaktelement (40, 47, 52, 56, 59, 60, 61, 62, 64, 69, 71, 73) ein Basismodul (44) aufweist, wobei das Basismodul (44) die Kontaktfedern (41, 42, 43) aufweist, und wobei das Basismodul (44) den Kontaktfedern (41, 42, 43) zugeordnete Eingänge (45) zum Anschluss ankommender und abgehender Kabeladern sowie den Kontaktfedern (41, 42, 43) zugeordnete Ausgänge (46) zum Anschluss eines Ergänzungsmoduls (48, 53, 57, 58, 63, 65, 70, 72, 74) aufweist,
c) an das Basismodul (44) jedes Kontaktelements (40, 47, 52, 56, 59, 60, 61, 62, 64, 69, 71, 73) ein oder mehrere Ergänzungsmodule (48, 53, 57, 58, 63, 65, 70, 72, 74) anschließbar sind, wobei durch die Kombination des Basismoduls (44) mit dem oder jedem Ergänzungsmodul (48, 53, 57, 58, 63, 65, 70, 72, 74) die Konfiguration des jeweiligen Kontaktelements (40, 47, 52, 56, 59, 60, 61, 62, 64, 69, 71, 73) veränderbar ist.

2. Verteilereinrichtung nach Anspruch 1, **dadurch gekennzeichnet, dass** die Ergänzungsmodule (48, 53, 57, 58, 63, 65, 70, 72, 74) und das Basismodul (44) in Reihenschaltung miteinander kombinierbar sind.

3. Verteilereinrichtung nach Anspruch 1 oder 2, **dadurch gekennzeichnet, dass** durch Auswahl des oder jeden Ergänzungsmoduls und/oder durch die Anzahl der Ergänzungsmodule und/oder durch die Reihenfolge der Ergänzungsmodule die Konfiguration des jeweiligen Kontaktelements bestimmt ist.

4. Verteilereinrichtung nach einem oder mehreren der Ansprüche 1 bis 3, **dadurch gekennzeichnet, dass** die Ergänzungsmodule (48, 53, 57, 58, 63, 65, 70, 72, 74) Eingänge (45a) bzw. Ausgänge (46b) aufweisen.

5. Verteilereinrichtung nach einem oder mehreren der Ansprüche 1 bis 4, **dadurch gekennzeichnet, dass** für einen Anschluss eines oder mehrerer Ergänzungsmodule (48, 53, 57, 58, 63, 65, 70, 72, 74) an das Basismodul (44) die Eingänge (45a) eines Ergänzungsmoduls in Ausgänge (46) des Basismoduls (44) oder in Ausgänge (46a) eines anderen Ergänzungsmoduls eingreifen, wobei diese Verbindungen zwischen Eingängen (45a) und Ausgängen (46, 46a) in Steckertechnik ausgeführt sind.

## Claims

1. Distribution device of a telecommunications system, namely distribution strip or distribution block having a plurality of distribution strips, the, or each, distribution strip having a plurality of contact elements, and each contact element having at least two contact springs, **characterized in that**:
a) each contact element (40, 47, 52, 56, 59, 60, 61, 62, 64, 69, 71, 73) has a modular design such that the configuration of each contact element (40, 47, 52, 56, 59, 60, 61, 62, 64, 69, 71, 73) can be changed by changing the modular design of the respective contact element,
b) each contact element (40, 47, 52, 56, 59, 60, 61, 62, 64, 69, 71, 73) has a base module (44), the base module (44) having the contact springs (41, 42, 43) and the base module (44) having inputs (45) assigned to the contact springs (41, 42, 43) for connecting incoming and outgoing cable conductors, and having outputs (46) assigned to the contact springs (41, 42, 43) for connecting an add-on module (48, 53, 57, 58, 63, 65, 70, 72, 74),
c) one or more add-on modules (48, 53, 57, 58, 63, 65, 70, 72, 74) can be connected to the base module (44) of each contact element (40, 47, 52, 56, 59, 60, 61, 62, 64, 69, 71, 73), the configuration of the respective contact element (40, 47, 52, 56, 59, 60, 61, 62, 64, 69, 71, 73) can be changed by combining the base module (44) with the, or each, add-on module (48, 53, 57, 58, 63, 65, 70, 72, 74).

2. Distribution device according to Claim 1, **characterized in that** the add-on modules (48, 53, 57, 58, 63, 65, 70, 72, 74) and the base module (44) can be cascaded together.

3. Distribution device according to Claim 1 or 2, **characterized in that** the configuration of the respective contact element is determined by the selection of the, or each, add-on module and/or by the number of add-on modules and/or by the order of the add-on modules.

4. Distribution device according to one or more of Claims 1 to 3, **characterized in that** the add-on modules (48, 53, 57, 58, 63, 65, 70, 72, 74) have inputs (45a) and outputs (46a) respectively.

5. Distribution device according to one or more of Claims 1 to 4, **characterized in that** for a connection of one or more add-on modules (48, 53, 57, 58, 63, 65, 70, 72, 74) to the base module (44), the inputs (45a) of an add-on module engage with outputs (46) of the base module (44) or with outputs (46a) of another add-on module, these connections between inputs (45a) and outputs (46, 46a) being implemented in connector technology.

## Revendications

1. Dispositif répartiteur d'un équipement de télécommunication, à savoir une barrette de répartition ou un bloc de répartition comprenant plusieurs barrettes de répartition, la ou chaque barrette de répartition présentant plusieurs éléments de contact et chaque élément de contact présentant au moins deux ressorts de contact, **caractérisé en ce que** :
a) chaque élément de contact (40, 47, 52, 56, 59, 60, 61, 62, 64, 69, 71, 73) présente une construction modulaire de telle sorte que la configuration de chaque élément de contact (40, 47, 52, 56, 59, 60, 61, 62, 64, 69, 71, 73) peut être modifiée en modifiant la construction modulaire de l'élément de contact correspondant,
b) chaque élément de contact (40, 47, 52, 56, 59, 60, 61, 62, 64, 69, 71, 73) présente un module de base (44), le module de base (44) présentant des ressorts de contact (41, 42, 43) et le module de base (44) présentant les entrées (45) associées aux ressorts de contact (41, 42, 43) pour le raccordement des fils entrants et sortants ainsi que les sorties (46) associées aux ressorts de contact (41, 42, 43) pour le raccordement d'un module complémentaire (48, 53, 57, 58, 63, 65, 70, 72, 74),
c) un ou plusieurs modules complémentaires (48, 53, 57, 58, 63, 65, 70, 72, 74) peuvent être raccordés à chaque élément de contact (40, 47, 52, 56, 59, 60, 61, 62, 64, 69, 71, 73) sur le module de base (44), la combinaison du module de base (44) avec le ou chaque module complémentaire (48, 53, 57, 58, 63, 65, 70, 72, 74) permettant de modifier la configuration de l'élément de contact (40, 47, 52, 56, 59, 60, 61, 62, 64, 69, 71, 73) correspondant.

2. Dispositif répartiteur selon la revendication 1, **caractérisé en ce que** les modules complémentaires (48, 53, 57, 58, 63, 65, 70, 72, 74) et le module de base (44) peuvent être combinés entre eux en un circuit série.

3. Dispositif répartiteur selon la revendication 1 ou 2, **caractérisé en ce que** la configuration de l'élément de contact correspondant est déterminée en sélectionnant le ou chaque module complémentaire et/ou par le nombre de modules complémentaires et/ou par l'ordre des modules complémentaires.

4. Dispositif répartiteur selon une ou plusieurs des revendications 1 à 3, **caractérisé en ce que** les modules complémentaires (48, 53, 57, 58, 63, 65, 70, 72, 74) présentent des entrées (45a) ou des sorties (46a).

5. Dispositif répartiteur selon une ou plusieurs des revendications 1 à 4, **caractérisé en ce que** pour le raccordement d'un ou de plusieurs modules complémentaires (48, 53, 57, 58, 63, 65, 70, 72, 74) au module de base (44), les entrées (45a) d'un module complémentaire pénètrent dans les sorties (46) du module de base (44) ou dans les sorties (46a) d'un autre module complémentaire, ces liaisons entre les entrées (45a) et les sorties (46, 46a) étant réalisées par technique d'enfichage.
